# EUROPEAN PATENT APPLICATION

(11) **EP 3 275 659 A1**
(43) Date of publication of application: **31.01.2018**
(21) Application number: 16768111.3
(22) Date of filing: 18.01.2016
(51) Int. Cl.: B41J 2/01, B41J 2/15

(54) **INK JET RECORDING APPARATUS AND INK JET RECORDING METHOD**

(30) Priority: 24.03.2015 JP 2015060588
(71) Applicant: Konica Minolta, Inc., Tokyo 100-7015 (JP)
(72) Inventor: TAKEUCHI, Setsu, Tokyo 100-7015 (JP)
(74) Representative: Henkel, Breuer & Partner
(86) International application number: PCT/JP2016/051208
(87) International publication number: WO 2016/152208

(57) **Abstract**

Provided are an ink jet recording apparatus and an ink jet recording method by which irregularities in the density of an image recorded by long recording means having a plurality of recording heads can be suppressed. The ink jet recording apparatus is provided with: recording means for ejecting ink onto a recording medium within a width in a sub-scanning direction corresponding to the arrangement of a plurality of recording heads, using recording element groups consisting of respective sub-recording element groups in the plurality of recording heads; and recording control means for controlling, while alternately performing main scanning control and sub-scanning control, the recording means such that the ink can be ejected in a complementary fashion from at least two recording elements corresponding to at least two events of main scanning control at respective positions in the sub-scanning direction of the recording medium, to record an image on the recording medium. The recording control means performs the main scanning control on the basis of thinned-out image data in which a print rate of the recording elements in joining regions, from among the recording element groups, is set to be smaller than the print rate of the recording elements not in the joining regions.

## Description

### Technological Field

The present invention relates to inkjet recording apparatuses and ink jet recording methods.

### Background Art

Inkjet recording apparatuses are known that each include a recording head having a plurality of nozzles aligned to eject ink. Such an apparatus ejects ink from the nozzles onto a recording medium for recording images while the recording head and a recording medium are relatively being moved. It is also known in such an inkjet recording apparatus that a technique involves repeating a main scanning operation for ejecting ink from nozzles onto a recording medium while moving the recording head in a main scanning direction and a subsidiary scanning operation for moving the recording medium in a subsidiary scanning direction, where ink is ejected at least two times from nozzles onto each line in the subsidiary scanning direction of the recording medium to form an image.

To satisfy recent requirements for increased recording rates and improved resolution of images to be recorded, such an inkjet recording apparatus includes an elongate head unit consisting of multiple recording heads disposed at different positions in the subsidiary scanning direction, and uses a technique of ejecting ink from these recording heads of the elongate head unit to record images.

Such an inkjet recording apparatus including an elongate head unit may produce images having an uneven density of the ink due to uneven positioning of the recording heads.

To avoid the uneven density of the ink, Patent Literature 1 discloses the following technique of reducing the uneven density of ink in images at joints between recording heads: The images corresponding to the joints are recorded by ejecting ink to regions having wavy boundaries and complementarily overlap with each other from a group of nozzles disposed near one end of one recording head and from a group of nozzles disposed near the other end of the one recording head or near an end of another recording head corresponding to the other end of the one recording head, and the images corresponding to individual joints formed by different combinations of recording heads are overlaid for recording.

### Prior Art Document

### Patent Document

Patent Literature 1: Japanese Patent Application Laid-Open No. 2014-141079

### Summary

### Problems to be Solved by the Invention

Unfortunately, the method described in Patent Literature 1 cannot eliminate the uneven density of ink in the images at those joints.

An object of the present invention is to provide an inkjet recording apparatus and an ink jet recording method which can reduce the uneven density of ink in images recorded with an elongate recorder including a plurality of recording heads.

### Means for Solving the Problem

In order to achieve the above objects, according to aspect 1 of the present invention, there is provided an inkjet recording apparatus, a recorder including multiple recording heads disposed at different positions in a subsidiary scanning direction and including multiple recording elements which eject ink, at least part of the multiple recording elements in each of the multiple recording heads defining a recording element subgroup, wherein the recording elements contained in a recording element group consisting of the recording element subgroups in the multiple recording heads eject the ink to a recording medium within a width in the subsidiary scanning direction according to an arrangement of the multiple recording heads; and a recording controller alternately performing a main scanning control for ejecting the ink from the recording element group to the recording medium while relatively moving the recorder and the recording medium in a main scanning direction intersecting the subsidiary scanning direction and a subsidiary scanning control for relatively moving the recorder and the recording medium in the subsidiary scanning direction, and controlling the recorder for recording an image on the recording medium such that the ink is complementarily ejected from at least two recording elements to positions of the recording medium in the subsidiary scanning direction according to at least two main scanning controls, characterized in that the recording controller performs the main scanning control based on thinned image data determined in an operation relevant to complementary ejection of the ink at the positions of the subsidiary scanning direction by the at least two recording elements, such that a print rate of a recording element in a joint region is lower than a print rate of a recording element in a region other than the joint region, the joint region being a predetermined neighboring region from a boundary in the subsidiary scanning direction between a recording element of one recording element subgroup and another recording element in a recording element subgroup adjacent to the one recording element subgroup in the subsidiary scanning direction, the print rate indicating a proportion of an operation relevant to ejection of the ink according to data of a target image to be recorded.

According to aspect 2 of the present invention, the inkjet recording apparatus according to aspect 1, wherein the thinned image data includes the print rates at ink ejection positions of the recording elements in the recording element group, the print rates being determined such that the recording element closer to the boundary has a lower print rate at the ink ejection position among the recording elements contained in the joint region.

According to aspect 3 of the present invention, the inkjet recording apparatus according to aspect 1 or 2, wherein the thinned image data is determined such that the print rates at the ink ejection positions by the recording elements belonging to regions of the recording element group divided at predetermined positions in the subsidiary scanning direction gradually decrease or increase according to the order of the recording elements disposed in the recording element group in the subsidiary scanning direction.

According to aspect 4 of the present invention, the inkjet recording apparatus according to any one of aspects 1 to 3, wherein the thinned image data is determined such that non-ejection positions not undergoing the operation relevant to the ejection of the ink are disposed at random in directions corresponding to the main scanning direction and the subsidiary scanning direction.

According to aspect 5 of the present invention, the inkjet recording apparatus according to aspects 1 to 4, wherein the thinned image data is determined such that the print rates at the ink ejection positions of the recording elements in an end region being a predetermined neighboring region from one end of the recording element group and the print rates at the ink ejection positions by the recording elements in the joint region are lower than the print rates at the ink ejection positions by the recording elements in regions other than the end region and the joint region.

According to aspect 6 of the present invention, the inkjet recording apparatus according to aspect 5, wherein the main scanning control and the subsidiary scanning control are performed based on a relative moving distance between the recorder and the recording medium in the subsidiary scanning control and the print rates of the recording elements in the main scanning control, wherein the subsidiary scanning control is set such that the number of operations relevant to the ejection of the ink performed in a first region of the recording medium by the recording elements contained in the end region is larger than the number of operations relevant to the ejection of the ink in a second region other than the first region in the thinned image data.

According to aspect 7 of the present invention, the inkjet recording apparatus according to any one of aspects 1 to 6, further comprising: a memory storing thinned pattern data indicating positioning of the non-ejection positions not undergoing the operation relevant to the ejection of the ink, and a thinning unit generating the thinned image data based on the image data and the thinned pattern data.

According to aspect 8 of the present invention, the inkjet recording apparatus according to any one of aspects 1 to 7, wherein an interval in the subsidiary scanning direction between a recording element of one recording element subgroup and another recording element of a recording element subgroup adjacent to the subsidiary scanning direction is larger than an interval in the subsidiary scanning direction between the recording elements of the one recording element subgroup.

According to aspect 9 of the present invention, the inkjet recording apparatus according to any one of aspects 1 to 8, wherein the print rates at the ink ejection positions by the recording elements in the recording element group contained in the thinned image data are determined such that the operation relevant to the ejection of the ink by specific recording elements of the recording element group is not performed in one of the main scanning controls and the operation relevant to the ejection of the ink is complementarily performed by the recording elements having the ink ejection positions at the non-ejection positions not undergoing the operation relevant to the ejection of the ink by the specific recording elements of the recording element group in the other of the main scanning controls.

According to aspect 10 of the present invention, the inkjet recording apparatus according to any one of aspects 1 to 9, further comprising an ink receiver receiving the ink ejected from the recording elements and not used in the recording of the image on the recording medium, wherein the recording controller causes the recording elements to eject the ink from the recording elements to the ink receiver if a predetermined condition is satisfied.

According to aspect 11 of the present invention, an ink jet recording method by an inkjet recording apparatus including a recorder that includes multiple recording heads disposed at different positions in a subsidiary scanning direction and including multiple recording elements ejecting ink, at least part of the multiple recording elements in each of the multiple recording heads defining a recording element subgroup, wherein the recording elements contained in a recording element group consisting of the recording element subgroups in the multiple recording heads eject the ink to a recording medium within a width in the subsidiary scanning direction according to an arrangement of the multiple recording heads, recording controlling of alternately performing main scanning control for ejecting the ink from the recording element group to the recording medium while relatively moving the recorder and the recording medium in a main scanning direction intersecting the subsidiary scanning direction and a subsidiary scanning control for relatively moving the recorder and the recording medium in the subsidiary scanning direction, and controlling the recorder for recording an image on the recording medium such that the ink is complementarily ejected from at least two recording elements to positions of the recording medium in the subsidiary scanning direction according to at least two main scanning controls, characterized in that the recording controlling performs the main scanning control based on thinned image data determined in an operation relevant to complementary ejection of the ink at the positions of the subsidiary scanning direction by the at least two recording elements such that a print rate of a recording element in a joint region is lower than a print rate of a recording element in a region other than the joint region, the joint region being a predetermined neighboring region from a boundary in the subsidiary scanning direction between a recording element of one recording element subgroup and another recording element in a recording element subgroup adjacent to the one recording element subgroup in the subsidiary scanning direction, the print rate indicating a proportion of an operation relevant to ejection of the ink according to data of a target image to be performed.

### Advantageous Effects of Invention

The present invention can reduce the uneven density of ink in images recorded with an elongate recorder including a plurality of recording heads.

### Brief Description of the Drawings

Fig. 1 is a schematic view illustrating an outline configuration of an embodiment of the inkjet recording apparatus according to the present invention.
Fig. 2 is a schematic view illustrating an ink ejecting face of a head unit mounted on a carriage.
Fig. 3 is a block diagram illustrating a configuration of main functions of the inkjet recording apparatus.
Fig. 4 is a diagram illustrating exemplary masking pattern data used in processing to thin pixels to be output by a recording element group.
Fig. 5 is a schematic view illustrating the ink positions for pixels to be output by the recording elements according to the thinned image data and the distribution of the print rates in several main scanning operations.
Fig. 6 is a flowchart illustrating a procedure to control image recording process.
Fig. 7 is a schematic view illustrating an example of relative positions of a head unit and the distribution of the print rates in several main scanning operations in Modification 1.
Fig. 8 is a schematic view illustrating another example of relative positions of a head unit and the distribution of the print rates in several main scanning operations in Modification 1.
Fig. 9 is a schematic view illustrating exemplary print rates set for regions of the recording element group and the relative positions of the head unit in several main scanning operations in Modification 2.
Fig. 10 is a schematic view illustrating a recording element group according to Modification 3.
Fig. 11 is a schematic view illustrating a main scanning operation according to Modification 4.
Fig. 12 is a schematic view illustrating another example configuration of the head unit.

### Embodiment for Carrying Out the Invention

Embodiments according to the inkjet recording apparatus and the inkjet recording method of the present invention will now be described with reference to the drawings.

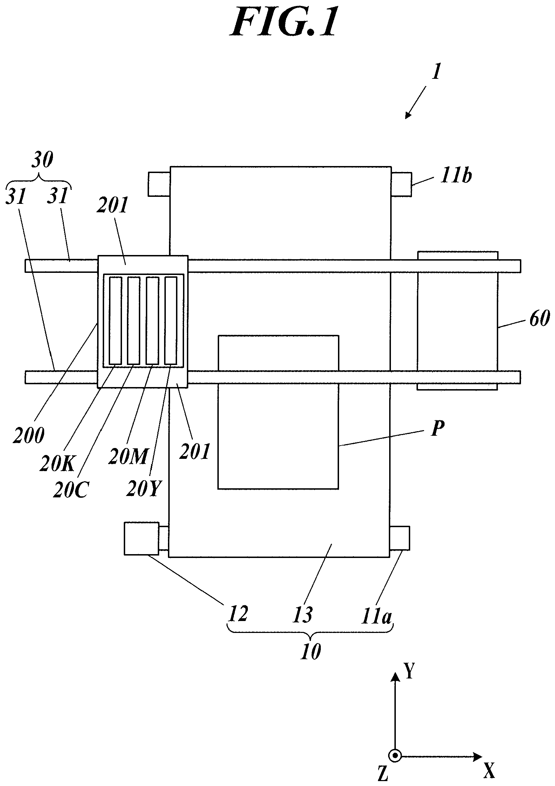

Fig. 1 is a schematic view illustrating an outline configuration of an inkjet recording apparatus 1 according to an embodiment of the present invention.

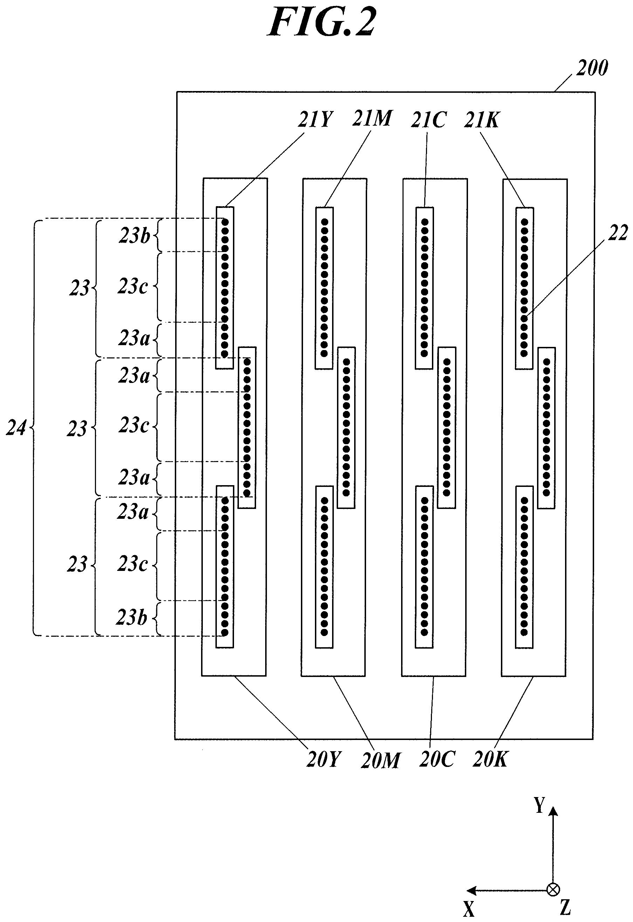

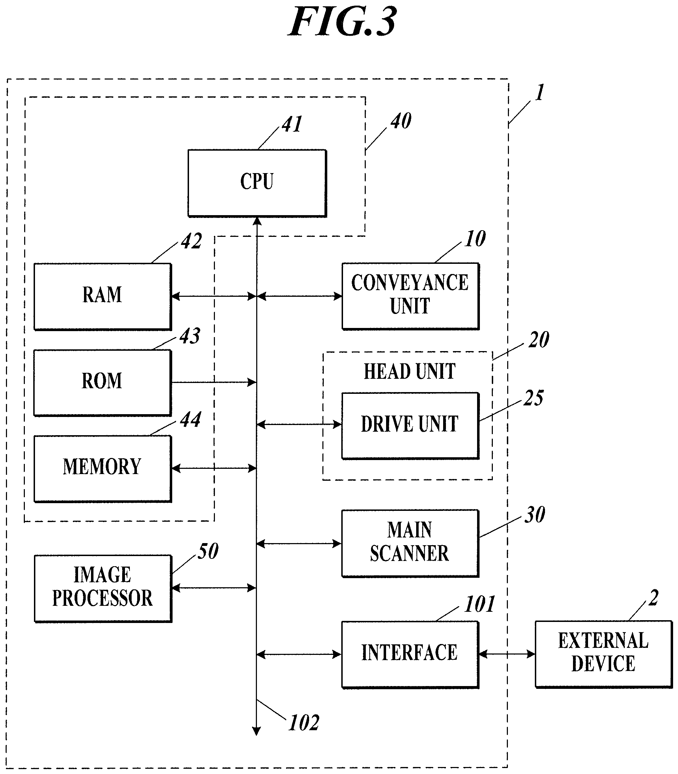

The inkjet recording apparatus 1 includes a conveyance unit 10 which feeds a recording medium P in a subsidiary scanning direction (Y direction in Fig. 1), a carriage 200 including head units 20Y, 20M, 20C, and 20K (also simply referred to as head unit 20) (recorder) having pluralities of recording heads 21Y, 21M, 21C, and 21K (Fig. 2) (also simply referred to as recording head 21) which eject ink, respectively, a main scanner 30 which drives the carriage 200 in a main scanning direction (X direction in Fig. 1) intersecting (in this example, orthogonal to) the subsidiary scanning direction for scan, a controller 40 (recording controller) which controls the operations of the units in the inkjet recording apparatus 1 (Fig. 3), an image processor 50, and an ink receiver 60.

The conveyance unit 10 includes a driving roller 11a, a following roller 11b, a driving motor 12, and a conveyor belt 13. The driving roller 11a and the following roller 11b rotate about their rotational axes extending in the main scanning direction to drive the conveyor belt 13 around the driving roller 11a and the following roller 11b. The driving roller 11a rotates by an angle proportional to the number of rotations of the driving motor 12 attached to one end of the driving roller 11a. The conveyor belt 13 carrying the recording medium P moves around the driving roller 11a and the following roller 11b to feed the recording medium P in the subsidiary scanning direction. The driving motor 12 rotates the driving roller 11a under the control of the controller 40 such that the recording medium P travels a predetermined distance in the subsidiary scanning direction at a predetermined timing.

The conveyance unit 10 includes a rotary encoder (not illustrated) which detects the angle of rotation of the driving roller 11a to transmit the results of detection to the controller 40.

The recording medium P can be selected from a variety of media having surfaces enabling fixation of the ejected ink (coloring material), for example, paper, fabrics, and resin sheets.

Fig. 2 is a schematic view illustrating the ink ejecting face of the head units 20 mounted on the carriage 200.

Four head units 20 are mounted on the carriage 200. These head units 20 each eject the ink onto the recording medium P placed on the conveyor belt 13 to record an image. In the present embodiment, the four head units 20Y, 20M, 20C, and 20K for four colors of ink, i.e., yellow (Y), magenta (M), cyan (C), and black (K) are aligned in sequence from the +X direction at a predetermined interval, and are mounted on the carriage 200.

The head unit 20Y for yellow ink includes three recording heads 21 Y mounted on a stage, driving circuits (not illustrated) disposed in the recording heads 21 Y to feed driving voltage waveforms to the recording heads 21Y, and drive controlling circuits which control the driving circuits. Each of the drive controlling circuits feeds pixel data contained in image data on the image to be recorded to its corresponding driving circuit to output the driving voltage waveform according to the pixel data from the driving circuit. The head units 20M, 20C, and 20K for magenta ink, cyan ink, and black ink also include three recording heads 21M, 21C, and 21K, respectively, and driving circuits, and drive control circuits. The drive control circuit and the driving circuit disposed in each head unit 20 form a drive unit 25 (Fig. 3) (thinning unit).

The recording head 21 includes a plurality of recording elements 22. These recording elements 22 are disposed at equal intervals in the subsidiary scanning direction and are categorized into recording element subgroups 23. The recording element 22 includes a pressure chamber which contains the ink, a piezoelectric element disposed on a wall surface of the pressure chamber, and a nozzle. The piezoelectric element receives the driving voltage waveform from the driving circuit of the recording head 21, and then the inner pressure of the pressure chamber varies according to the driving voltage waveform to eject the ink from the nozzle in communication with the pressure chamber. The drive controlling circuit in the drive unit 25 causes the driving circuit to output the driving voltage waveform to the recording element 22 for performing an ejection operation for ejecting the ink from the nozzle of the recording element 22 in an amount corresponding to the pixel data or a non-ejection operation for ejecting no ink according to the pixel data. In this specification, the execution of the ejection operation or the non-ejection operation (operation relevant to the ejection of the ink) by the recording element 22 is referred to as output of the pixel by the recording element 22.

The nozzle of the recording element 22 has an opening in the ink ejecting face of the head unit 20 facing the conveyor belt 13. Fig. 2 is a schematic view illustrating the ink ejecting face of the head unit 20 mounted on the carriage 200, in which parts of the openings of the nozzles contained in the recording elements 22 are drawn as circles.

The recording elements 22 in the recording element subgroups 23 do not always need to be directed in the subsidiary scanning direction. The recording elements 22 in the recording element subgroups 23 may be aligned in a direction intersecting the main scanning direction. Alternatively, the recording element subgroups 23 each may include two or more rows of recording elements 22 aligned in the subsidiary scanning direction, in which the recording elements 22 in the two or more rows are disposed at different positions in the subsidiary scanning direction within the recording element subgroup. Alternatively, the recording elements 22 contained in the recording element subgroups 23 are aligned at least at different positions in the subsidiary scanning direction, and do not need to form a row.

While each of the recording heads 21 includes sixteen recording elements 22 in Fig. 2, the recording head can include any number of recording elements. Each recording head 21 can include a larger number (for example, hundreds) of recording elements 22.

Each head unit 20 includes three recording heads 21 disposed at different positions in a zig-zag pattern in the subsidiary scanning direction. The three recording heads 21 form an elongate head unit 20. The recording element subgroups 23 contained in the recording heads 21 defines a recording element group 24. The recording element group 24 ejects the ink to the recording medium P across the recording width in the subsidiary scanning direction according to the arrangement of the plurality of recording heads 21. In the present embodiment, the recording element subgroups 23 in each of the three recording heads 21 are disposed such that their positions in the subsidiary scanning direction do not overlap with each other (or such that the recording element subgroups 23 are not adjacent to each other in the main scanning direction), and such that the intervals in the subsidiary scanning direction between the recording element subgroups 23 are approximately identical to the intervals in the subsidiary scanning direction between the recording elements 22 in the recording element subgroups 23.

The recording elements 22 of the recording element group 24 having such a configuration are divided into the recording elements 22 in joint regions 23a, the recording elements 22 in end regions 23b, and the recording elements 22 in a central region 23c, where the joint region 23a indicates a region near a joint or a predetermined neighboring region from a boundary (joint) in the subsidiary scanning direction between a recording element 22 in one recording element subgroup 23 and a recording element 22 in its adjacent recording element subgroup 23 in the subsidiary scanning direction; the end region 23b indicates a predetermined neighboring region from each end of the recording element group 24; and the central region 23c indicates regions excluding the joint regions 23a and the end regions 23b.

Throughout the specification, the predetermined neighboring region indicates a region in which ink droplets ejected from the recording elements 22 at the two ends in the subsidiary scanning direction in this region can be visually recognized as separate ink droplets ejected to different positions, and the length in the subsidiary scanning direction is determined to be about 1/3 or less of the length of the recording element subgroup 23 in the subsidiary scanning direction. In the present embodiment, the lengths in the subsidiary scanning direction of the joint region 23a and the end region 23b are each 1/4 of the length of the recording element subgroup 23 in the subsidiary scanning direction. In this specification, the length of the recording element subgroup 23 is determined by multiplying the interval in the subsidiary scanning direction between the recording elements 22 in the recording element subgroup 23 by the number of recording elements 22 contained in the recording element subgroup. The region in the subsidiary scanning direction of the recording element subgroup 23 contains regions projecting from the positions of the recording elements 22 at the two ends of the recording element subgroup 23 to the two sides of the subsidiary scanning direction by half the interval in the subsidiary scanning direction between the recording elements 22.

The main scanner 30 includes a pair of carriage rails 31 extending in the main scanning direction and disposed across the conveyor belt 13. The carriage 200 is mounted on the pair of carriage rails 31 and can reciprocate along the main scanning direction. Specifically, a holder 201 extending from the two ends of the carriage 200 in the subsidiary scanning direction is placed on the carriage rails 31 to slide on the carriage rails 31 in the main scanning direction by a linear motor (not illustrated).

The main scanner 30 also includes a linear encoder (not illustrated) which detects the position of the carriage 200 in the main scanning direction to transmit the results of detection to the controller 40.

The ink receiver 60 is a tray which receives the ink ejected from the recording elements 22 of the head units 20 located above the ink receiver 60 but not used in the recording of the image on the recording medium P. To prevent failures such as reduced image quality and poor ejection of the ink caused by an increased viscosity of the ink in the nozzles of the recording elements 22 which eject the ink less frequently, the inkjet recording apparatus 1 performs a discharge operation to eject the ink from the recording elements 22 of the head units 20 into the ink receiver 60 during the image recording process described later or at a predetermined timing during a period when the image recording process is not performed. A wiper may be further disposed to wipe the ink ejecting faces of the head unit 20 located above the ink receiver 60 using a washing liquid.

Fig. 3 is a block diagram illustrating a configuration of main functions of the inkjet recording apparatus 1.

The inkjet recording apparatus 1 includes a controller 40 including a central processing unit (CPU) 41, a random access memory (RAM) 42, a read only memory (ROM) 43 (memory unit), and a memory 44 (memory unit), an image processor 50, an interface 101, the conveyance unit 10, the drive unit 25 for the head unit 20, and the main scanner 30. The CPU 41 is connected to the RAM 42, the ROM 43, the memory 44, the conveyance unit 10, the drive unit 25, the main scanner 30, the image processor 50, and the interface 101 through a bus 102.

The CPU 41 performs a variety of calculations to control the entire operation of the inkjet recording apparatus 1. For example, the CPU 41 outputs a control signal to the main scanner 30; then, the main scanner 30 drives the carriage 200 in the main scanning direction at a predetermined timing and rate. The CPU 41 outputs control signals and part of the image data to the drive controlling circuits for the drive units 25 while moving the carriage 200 in the main scanning direction. The drive controlling circuit then outputs the driving waveform signals according to the thinned image data described later from the driving circuits to the recording elements 22 to perform main scanning control to eject the ink from the recording elements 22. The CPU 41 outputs a control signal to the driving motor 12 of the conveyance unit 10 at a predetermined timing. The conveyance unit 10 then performs subsidiary scanning control to feed the recording medium P in the subsidiary scanning direction by a predetermined distance.

The RAM 42 provides a working memory space to the CPU 41 to store temporary data. The RAM 42 may contain a non-volatile memory.

The ROM 43 stores a variety of control programs performed by the CPU 41 and setting data. The setting data contains masking pattern data 70 (thinned pattern data) described later. The masking pattern data 70 may be stored in the memory 44. The ROM 43 may be replaced with a rewritable non-volatile memory, such as an electrically erasable programmable read only memory (EEPROM) or a flash memory.

The memory 44 includes a dynamic random access memory (DRAM), and stores job information including image data input from an external device 2 to the controller 40 through the interface 101. The image data and others may be stored in the RAM 42.

The image processor 50 performs rasterization, color conversion, gradation correction, and halftone processing, when necessary, on the image data stored in the memory 44, and stores the processed image data in the memory 44.

The interface 101 transmits and receives data to and from the external device 2, and is composed of one of a variety of serial interfaces and parallel interfaces or a combination thereof.

The external device 2 is a personal computer, for example, and feeds the image data of the image to be recorded by the inkjet recording apparatus 1 through the interface 101 to the controller 40.

The image recording operation to record an image on the recording medium P by the inkjet recording apparatus 1 will now be described.

In the image recording operation during recording of the image on the recording medium P, the main scanning operation for ejecting the ink from the recording element group 24 to the recording medium P while moving the head units 20 in the main scanning direction and the subsidiary scanning operation for moving the recording medium P in the subsidiary scanning direction are alternately performed. As a result, the head units 20 are controlled such that the ink can be complementarily ejected from at least two recording elements 22 to the positions of the recording medium P in the subsidiary scanning direction according to at least two main scanning operations, thereby recording the image. To complementarily eject the ink by the main scanning operations, the pixels to be output by the recording element group 24 are thinned as described later in each main scanning operation to record the image.

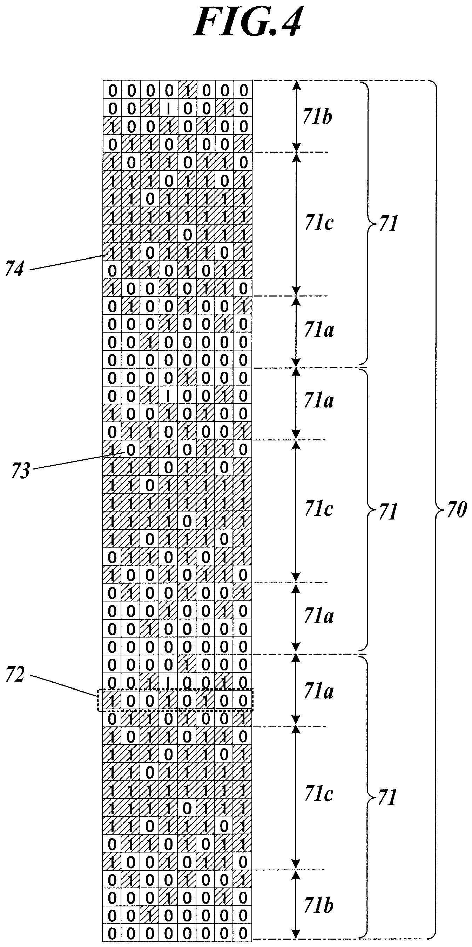

Fig. 4 is a diagram illustrating an example masking pattern data 70 used in the thinning process of the pixels to be output by the recording element group 24.

The masking pattern data 70 consists of masking parts 73 having a value "0" and output parts 74 having a value "1" aligned in the row direction (longitudinal direction in Fig. 4) and the column direction (traverse direction in Fig. 4) in the form of a two-dimensional matrix. The number of data segments in the row direction of the masking pattern data 70 is identical to the number of recording elements 22 contained in the recording element group 24. The number of data segments is 48 in the present embodiment. The number of data segments in the column direction is 8.

The number of data segments in the row direction of the masking pattern data 70 does not always need to be identical to the number of recording elements 22 contained in the recording element group 24. The number of data segments in the column direction may be varied according to the number of recording elements 22 in the recording element group 24. The number of data segments in the column direction may be, for example, 256 if the recording element group 24 includes hundreds of recording elements 22.

In the column data group 72, the data corresponding to one of columns aligned in the column direction of the masking pattern data 70 corresponds to one of the recording elements 22 in the recording element group 24, and represents a pattern of pixels to be output by the corresponding recording element 22 in the main scanning operation. The proportion of the number of output parts 74 to the number of data segments in a column data group 72 corresponds to the print rate of the recording element 22 corresponding to the column data group 72. In other words, the print rate represents the proportion of the pixels to be output as a result of an ink ejection operation or a non-ejection operation according to the values in the pixel data to the pixels of the pixel data corresponding to the recording element 22. The masking pattern data 70 consists of three data groups 71 joined in the row direction, the three data groups 71 corresponding to the three recording element subgroups 23 in the recording head 21, respectively. Hereinafter, of the masking pattern data 70, the data groups corresponding to the joint region 23a, the end region 23b, and the central region 23c in the recording element group 24 are expressed as a joint data group 71a, an end data group 71b, and a central data group 71c, respectively.

In each of the several main scanning operations, under the control of the controller 40, the drive controlling circuit for the drive unit 25 multiplies the data corresponding to a portion to be recorded in each several main scanning operation in the image data of the image to be recorded on the recording medium P by the masking pattern data 70. Based on the resulting thinned image data, the drive controlling circuit feeds a driving voltage waveform from the driving circuit to the recording element 22 to eject the ink. Specifically, in the pixel located at the position corresponding to the masking part 73 of the masking pattern data 70 in the image data, multiplying the pixel data by the value "0" of the masking part 73 results in the thinned image data having a value "0". In this case, the drive controlling circuit feeds a driving voltage waveform corresponding to the non-ejection of the ink from the recording element 22 from the driving circuit to the recording element 22, causing the recording element 22 to perform the non-ejection operation. In the pixel located at the position corresponding to the output part 74 of the masking pattern data 70 in the image data, multiplying the pixel data by the value "1" of the masking part 73 results in the thinned image data keeping the same value as that of the pixel data in the image data. In this case, the drive controlling circuit feeds a driving voltage waveform for ejecting the ink from the recording element 22 according to the value of the pixel data from the driving circuit to the recording element 22, causing the recording element 22 to perform the ejection operation. If the number of data segments in the column direction of the masking pattern data 70 is smaller than the number of pixels in the main scanning direction of the image data, a masking pattern composed of several segments of the masking pattern data 70 connected in the column direction is used.

In the masking pattern data 70 illustrated in Fig. 4, the arrangement of the output part 74 is determined such that the print rates of the joint data group 71a and the end data group 71b are lower than the print rate of the central data group 71 c.

In the joint data group 71a, the arrangement of the output part 74 is determined such that the print rate is lower in the column data group 72 corresponding to the recording element 22 closer to the joint of the recording element subgroup 23, i.e., in the ink ejection position from the recording element 22 closer to the joint. In the end data group 71b, the arrangement of the output part 74 is determined such that the print rate is lower in the column data group 72 corresponding to the recording element 22 closer to the end of the recording element group 24. Specifically, the arrangement of the output part 74 is determined in the example of Fig. 4 such that the number of output parts 74 contained in the column data group 72 corresponding to a recording element 22 in the recording element subgroup 23 is smaller by one than the number of output parts 74 contained in the column data group 72 corresponding to another recording element 22 adjacent to the recording element 22 and remote from the joint of the recording element subgroup 23 or the end of the recording element group 24. As a result, the print rates of the column data groups 72 corresponding to the recording elements 22 disposed in sequence in the subsidiary scanning direction in the recording element group 24 gradually increases or decreases according to the order of the recording elements 22. In other words, the output parts 74 are disposed in the masking pattern data 70 to have such a distribution that the print rate in or near the center in the row direction of each data group 71 is 100%, and the print rate gradually decreases closer to 0% toward the joint of the joint data group 71a and the one ends of the end data groups 71b (or gradually increases from the joint and the one ends toward the center in the row direction of the data group 71).

The output parts 74 are arranged in the masking pattern data 70 such that the masking parts 73 are arranged at random in both the row direction and the column direction. As a result, non-ejection positions not undergoing the operations relevant to the ejection of the ink by the recording elements 22 are arranged at random.

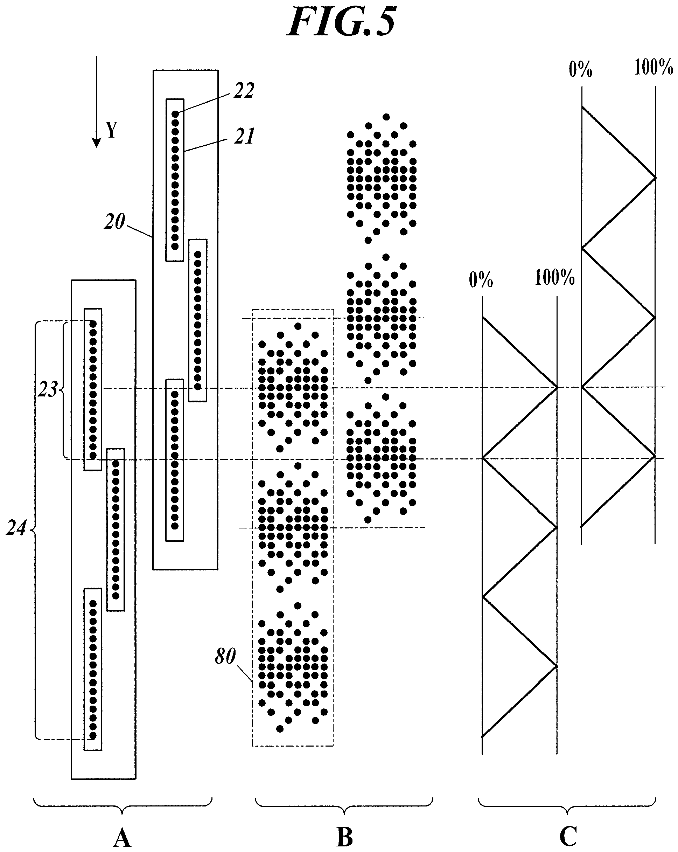

Fig. 5 is a schematic view illustrating the positions for pixels to be output by the recording elements 22 according to the thinned image data and the distribution of the print rates in several main scanning operations.

Portion A of Fig. 5 illustrates the relatively positional relationship of a head unit 20 in the subsidiary scanning direction in two continuous main scanning operations. The position of the head unit 20 on the recording medium P in the first main scanning operation is illustrated on the left in Portion A of Fig. 5 while the position of the head unit 20 on the recording medium P in the second main scanning operation is illustrated on the right in Portion A of Fig. 5. In the present embodiment, for each subsidiary scanning operation, the head unit 20 moves relative to the recording medium P by a distance equal to half the length of the recording element group 24 in the subsidiary scanning direction (i.e., 3/2 of the length of the recording element subgroup 23 in the subsidiary scanning direction) such that the ink is ejected from the recording element group 24 located in the respective positions in the subsidiary scanning direction of the recording medium P according to the two main scanning controls.

Portion B of Fig. 5 illustrates an output pattern 80 representing the positions of the pixels to be output from the recording elements 22 of the recording element group 24 in the head unit 20 illustrated in Portion A of Fig. 5 in the main scanning operations. The output pattern 80 of the first main scanning operation is illustrated on the left in Portion B of Fig. 5 while the output pattern 80 of the second main scanning operation is illustrated on the right in Portion B of Fig. 5. Although the output pattern 80 recorded in one of the two main scanning operations is shifted from that recorded by the other main scanning operation in the traverse direction in the illustration of Portion B of Fig. 5, recording is conducted on the recording medium P such that the positions of the two output patterns 80 in the traverse direction overlap with each other. The output pattern 80 matches the pattern of the ink ejected in the case of the data of a solid image.

Portion C of Fig. 5 illustrates the distribution of the print rates at the respective positions on the recording medium P in the subsidiary scanning direction in the two main scanning operations. The print rates have a distribution reflecting the print rates set according to the arrangement of the output parts 74 in the masking pattern data 70. In other words, this distribution contains a print rate of 100% in the central portion of each recording element subgroup 23, a print rate of 0% in the joints of the recording element subgroups 23 and the two ends of the recording element group 24, and a print rate linearly varying in the regions other than the regions described above.

In this specification, the output patterns 80 according to the two main scanning operations illustrated in Portion B of Fig. 5 have a complementary relationship about the positions of the pixels to be output by the recording elements 22 (i.e., positions to which the ink is ejected). In other words, in the subsidiary scanning direction in Portion B of Fig. 5, the output pattern 80 in the second main scanning operation (on the right in Portion B of Fig. 5) is set so as to output pixels in the positions not output in the output pattern 80 in the first main scanning operation (on the left in Portion B of Fig. 5). As a result, the print rates of the positions on the recording medium P in the subsidiary scanning direction illustrated in Portion C of Fig. 5 have a distribution such that the total of the first print rate and the second print rate amounts to 100%.

The inkjet recording apparatus 1 alternately performs the main and subsidiary scanning operations. Through these scanning operations, the positions in the subsidiary scanning direction of the recording medium P receive the ink ejected from different recording elements 22 in the recording element group 24 several times to record part of the image on these positions. The main and subsidiary scanning operations are repeated by multiple times according to the size of the image data to record the entire image on the recording medium P.

The image recording process to perform the image recording operation by the inkjet recording apparatus 1 will now be described.

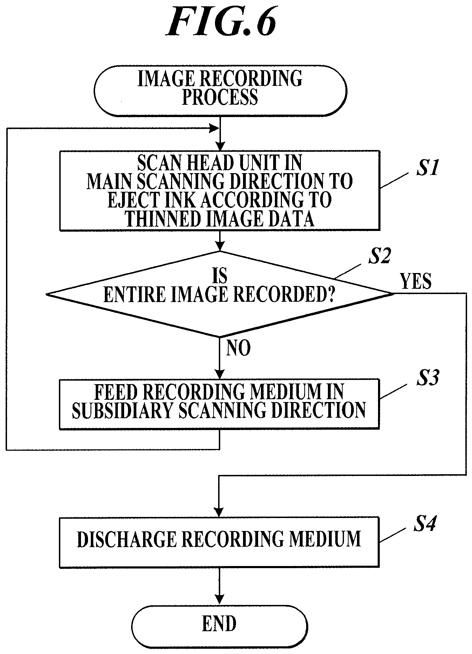

Fig. 6 is a flowchart illustrating a procedure of controlling the image recording process.

The image data of an image to be recorded on a recording medium P is fed from the external device 2 through the interface 101, and is stored in the memory 44; then, the controller 40 causes the conveyance unit 10 to feed the recording medium P to a predetermined position in the subsidiary scanning direction corresponding to the initial recording position of the image. The controller 40 outputs the image data for a main scanning operation to the head unit 20, and performs the main scanning control for ejecting the inks from the recording elements 22 of the head units 20 at a predetermined timing according to the thinned image data while the main scanner 30 is driving the carriage 200 in the main scanning direction at a predetermined rate (Step S1). In other words, the controller 40 controls the drive units 25 for the head units 20 and the main scanner 30 to perform the main scanning operation. As described above, the ink is ejected as follows: The driving voltage waveform according to the thinned image data determined by multiplying the image data by the masking pattern data 70 by the drive controlling circuit in the drive unit 25 is fed from the driving circuit to the recording elements 22, causing the recording elements 22 to perform the ejection operation or the non-ejection operation of the ink according to the pixel data. As a result, the ink is ejected from the head unit 20 to the positions on the recording medium P according to the output pattern 80. In this step, the segments in the image data to be multiplied by the masking pattern data 70 are selected in Step S1 according to the ordinal number of the main scanning operation.

If a predetermined condition is satisfied, the controller 40 drives the carriage 200 to the upper region of the ink receiver 60 after completion of the main scanning control, causing the head unit 20 to perform the discharge operation. In this step, the predetermined condition may be a predetermined time from the completion of the latest discharge operation.

After the processing in Step S 1, the controller 40 determines whether the recording of all the portions in the image is completed (Step S2). If the controller 40 determines that unrecorded portions are left ("YES" in Step S2), the controller 40 performs the subsidiary scanning control for feeding the recording medium P in the subsidiary scanning direction by a predetermined distance (Step S3). As described above, in the present embodiment, the controller 40 feeds the recording medium P using the conveyance unit 10 in the subsidiary scanning direction by a distance equal to half the length of the recording element group 24 in the subsidiary scanning direction in a single subsidiary scanning control operation.

After Step S3, the processing goes to Step S1 in the controller 40.

If it is determined that all of the thinned image data of the image to be recorded is used and the entire image is recorded on the recording medium P in Step S2 ("NO" in Step S2), the controller 40 discharges the recording medium P carrying the recorded image from the conveyance unit 10 to a predetermined sheet discharger (Step S4).

If Step S4 is completed, the controller 40 terminates the image recording process.

As described above, the inkjet recording apparatus 1 according to the present embodiment includes head units 20 each including multiple recording heads 21 disposed at different positions in the subsidiary scanning direction and including multiple recording elements 22 which eject the ink, at least part of the recording elements 22 in each of the recording heads 21 defining a recording element subgroup 23, the recording elements 22 contained in the recording element group 24 consisting of the recording element subgroups 23 in the recording heads 21 ejecting the ink to the recording medium P within a width in the subsidiary scanning direction according to the multiple recording heads 21. The inkjet recording apparatus 1 also includes the controller 40 (recording controller) alternately performing the main scanning control for ejecting the ink from the recording element group 24 to the recording medium P while relatively moving the head units 20 and the recording medium P in the main scanning direction intersecting the subsidiary scanning direction and the subsidiary scanning control for relatively moving the head units 20 and the recording medium P in the subsidiary scanning direction, and controlling the head units 20 for recording an image on the recording medium P such that the ink is complementarily ejected from at least two recording elements 22 to the positions of the recording medium P in the subsidiary scanning direction according to at least two main scanning controls. In the operation relevant to the complementary ejection of the ink at the positions in the subsidiary scanning direction of the recording medium P by the at least two recording elements 22, the controller 40 performs the main scanning control based on the thinned image data set such that print rate of the recording element 22 in the joint region 23a is lower than the print rate of a recording element 22 in a region other than the joint region 23a, the joint region being a predetermined neighboring region from the boundary between a recording element 22 of one recording element subgroup 23 and another recording element 22 of the recording element subgroup 23 adjacent to this recording element subgroup 23 in the subsidiary scanning direction, the print rate indicating the proportion of the operation relevant to the ejection of the ink according to the data of the target image. According to such a configuration, the density in the output pattern 80 by the recording element 22 in the joint region 23a for each main scanning control is lower than that in the output pattern 80 by the recording element 22 in the region other than the joint region 23a, thus relatively reducing the density of the image portions recorded by the recording elements 22 in the joint region 23a. As a result, visual recognition of the uneven density generated in the portions recorded by the recording elements 22 in the joint region 23a and corresponding to the joints between the recording element subgroups 23 in the image recording by the inkjet recording apparatus 1 can be reduced. Moreover, an image is recorded by the recording elements 22 in the joint regions 23a in one main scanning control, and then another image having relatively higher density than that of the recorded image is recorded over the recorded image portions by another recording element 22 in the recording element group 24 in another main scanning control. For this reason, the visual recognition of the uneven density of the portions recorded by the recording elements 22 in the joint region 23a and corresponding to the joint between the recording element subgroups 23 can be further reduced. Since such an effect is attained, the inkjet recording apparatus 1 can record an image with a reduced uneven density even if the recording heads 21 have a variation in volume of ink ejection. Additionally, the uneven density of the image recorded by the inkjet recording apparatus 1 can be reduced without precise positioning of the recording heads 21 in the head unit 20.

The print rate of the ink ejection position of the recording element 22 in the recording element group 24 is determined such that the ink ejection position of the recording element 22 closer to the boundary has a lower print rate in the thinned image data, among the recording elements 22 contained in the joint region 23a. The image portion closer to the joint of the recording head 21 can thereby have a lower density, resulting in a further reduction in the visual recognition of the uneven density of the image recorded by the inkjet recording apparatus 1.

In the thinned image data, the print rates at the ink ejection positions by the recording elements 22 in the regions divided at predetermined positions of the recording element group 24 in the subsidiary scanning direction are configured to gradually decrease or increase according to the order of the recording elements 22 disposed in the subsidiary scanning direction in the recording element group 24. In such allocation of the print rate, the image recorded by the recording element group 24 can have a density smoothly varying in the subsidiary scanning direction, and the visual recognition of the uneven density of the image recorded by the inkjet recording apparatus 1 can be further reduced.

The thinned image data is determined such that the non-ejection positions not undergoing the operation relevant to the ejection of the ink are disposed at random in the directions corresponding to the main scanning direction and the subsidiary scanning direction. Such thinned image data can obscure the boundaries between the portions carrying the ink ejected by the recording element group 24 and the portions not carrying the ink by the recording element group 24 in the recorded image, resulting in a further reduction in the visual recognition of the uneven density of the image recorded by the inkjet recording apparatus 1.

The inkjet recording apparatus 1 according to the present embodiment also includes the ROM 43 which stores the thinned pattern data indicating the arrangement of the positions not undergoing the operation relevant to the ejection of the ink, and a drive unit 25 which generates the thinned image data based on the image data and the masking pattern data 70. The inkjet recording apparatus 1 having such a configuration can generate the thinned image data based on the image data on an image to be recorded to form the image.

The inkjet recording apparatus 1 according to the present embodiment also includes the ink receiver 60 which receives the ink ejected from the recording elements 22 to the recording medium P but not used in the recording of the image. If the predetermined condition is satisfied, the ink is ejected from the recording elements 22 contained in the recording element group 24 to the ink receiver by the controller 40 (recording controller). This operation can prevent an increase in viscosity of the ink in the nozzles of the recording elements 22 which eject the ink less frequently due to the thinned output of the pixels, reducing the generation of the failures, such as poor ejection of the ink.

### (Modification 1)

Modification 1 according to the embodiment will now be described. In Modification 1, the ink is ejected from different recording elements 22 in the recording element group 24 to the positions of the recording medium P in the subsidiary scanning direction according to three or more main scanning operations to record an image. Other points are similar to those in the embodiment, and differences from the embodiment will be described.

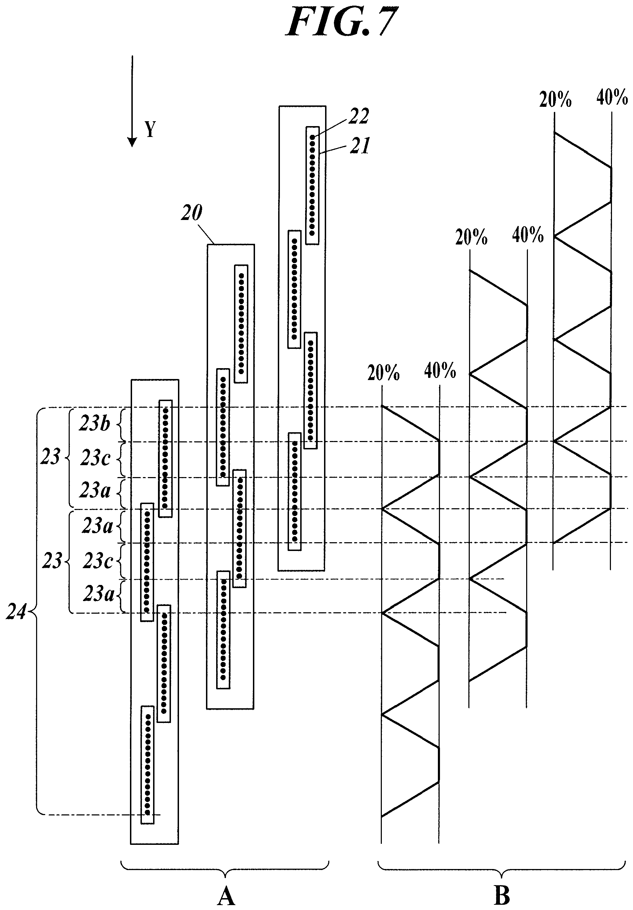

Fig. 7 is a schematic view illustrating the relative positions of a head unit 20 and the distribution of the print rates in several main scanning operations in Modification 1. Fig. 7 illustrates an example of the ink ejected to the positions of the recording medium P in the subsidiary scanning direction according to the three main scanning operations to form an image. In Fig. 7, the head unit 20 includes four recording heads 21, and the recording element group 24 is composed of the recording element subgroups 23 corresponding to the four recording heads 21.

Portion A of Fig. 7 illustrates a relative positional relationship of the head unit 20 in the subsidiary scanning direction in three continuous main scanning operations. In the example illustrated in Fig. 7, in each of the subsidiary scanning operations, the head unit 20 relatively moves on the recording medium P in the subsidiary scanning direction by a distance equal to 1/3 of the length of the recording element group 24 in the subsidiary scanning direction (i.e., 4/3 of the length of the recording element subgroup 23 in the subsidiary scanning direction).

Portion B of Fig. 7 illustrates the distribution of the print rates in the positions of the recording medium P in the subsidiary scanning direction in the main scanning operations.

In the example illustrated in Fig. 7, the lengths of the joint region 23a, the end region 23b, and the central region 23c of the recording element subgroup 23 in the subsidiary scanning direction are set to 1/3 of the length of the recording element subgroup 23 in the subsidiary scanning direction. The print rate of the central region 23c is set at 40% while the print rates of the joint region 23a and the end region 23b are set such that the print rate linearly decreases from the central region 23c towards the two ends of the recording element subgroup 23 and the print rate at the two ends of the recording element subgroup 23 is 20%. As a result, at each identical position in the subsidiary scanning direction in Portion B of Fig. 7, the positions on the recording medium P in the subsidiary scanning direction each have such a distribution of the print rate that the total print rate in the first, second, and third main scanning operations amounts to 100%.

In the example illustrated in Fig. 7, the arrangement of the output part 74 in the masking pattern data 70 is determined such that the print rate in each of the three main scanning operations has such a distribution and the positions of the pixels to be output by the recording element group 24 in the three main scanning operations have a complementary relationship.

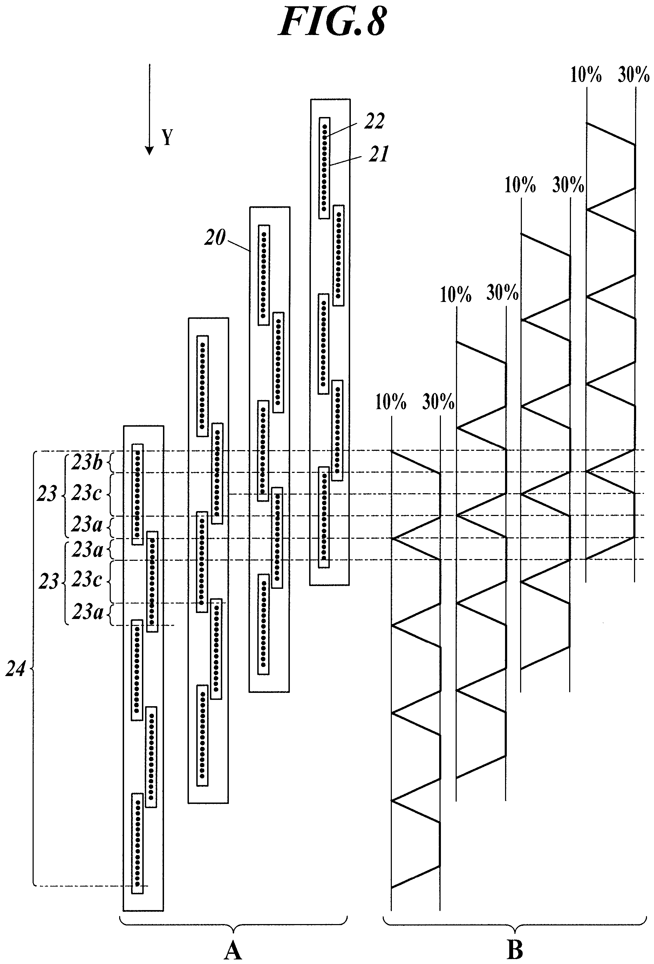

Fig. 8 is a schematic view illustrating another example of the relative positions of a head unit 20 and the distribution of the print rates in several main scanning operations in Modification 1. Fig. 8 illustrates an example of the ink ejected to the positions of the recording medium P in the subsidiary scanning direction by four main scanning operations to form an image. In Fig. 8, the head unit 20 includes five recording heads 21, and the recording element group 24 consists of the recording element subgroups 23 corresponding to the five recording heads 21.

As illustrated in Portion A of Fig. 8, the head unit 20 relatively moves on the recording medium P in the subsidiary scanning direction by a distance equal to 1/4 of the length of the recording element group 24 in the subsidiary scanning direction (i.e., 5/4 of the length of the recording element subgroup 23 in the subsidiary scanning direction) in each of the subsidiary scanning operations.

The lengths of the joint region 23a and the end region 23b of the recording element subgroup 23 in the subsidiary scanning direction are set at 1/4 of the length of the recording element subgroup 23 in the subsidiary scanning direction, and the length of the central region 23c in the subsidiary scanning direction is set at half the length of the recording element subgroup 23 in the subsidiary scanning direction. As illustrated in Portion B of Fig. 8, the print rate of the central region 23c is set at 30% while the print rates of the joint region 23a and the end region 23b are set such that the print rate linearly decreases from the central region 23c towards the two ends of the recording element subgroup 23 and the print rate of the two ends of the recording element subgroup 23 is 10%. As a result, at each identical position in the subsidiary scanning direction in Portion B of Fig. 8, the positions on the recording medium P in the subsidiary scanning direction each have such a distribution of the print rate that the total print rate of the first to fourth main scanning operations amounts to 100%.

In the example illustrated in Fig. 8, the arrangement of the output part 74 in the masking pattern data 70 is determined such that the print rate in each of the four main scanning operations has such a distribution and the positions of the pixels to be output by the recording element group 24 in the four main scanning operations have a complementary relationship.

As in Modification 1, the image formation in the positions of the recording medium P in the subsidiary scanning direction through three or more main scanning operations can increase the number of images recorded by other recording elements 22 in other main scanning control operations and overlaid on the image recorded by the recording elements 22 in the joint region 23a. As a result, the image recorded by the inkjet recording apparatus 1 can have a further reduced uneven density, resulting in a further reduction in the visual recognition of the uneven density of the portions corresponding to the joints of the recording element subgroups 23.

### (Modification 2)

Modification 2 of the embodiment will now be described. Modification 2 may be combined with other modifications.

In Modification 2, an example will be described in which the print rates of the pixels corresponding to the end region 23b are set to be lower than those of the pixels corresponding to the joint region 23a. Other points are similar to those in the embodiment, and differences from the embodiment will be described.

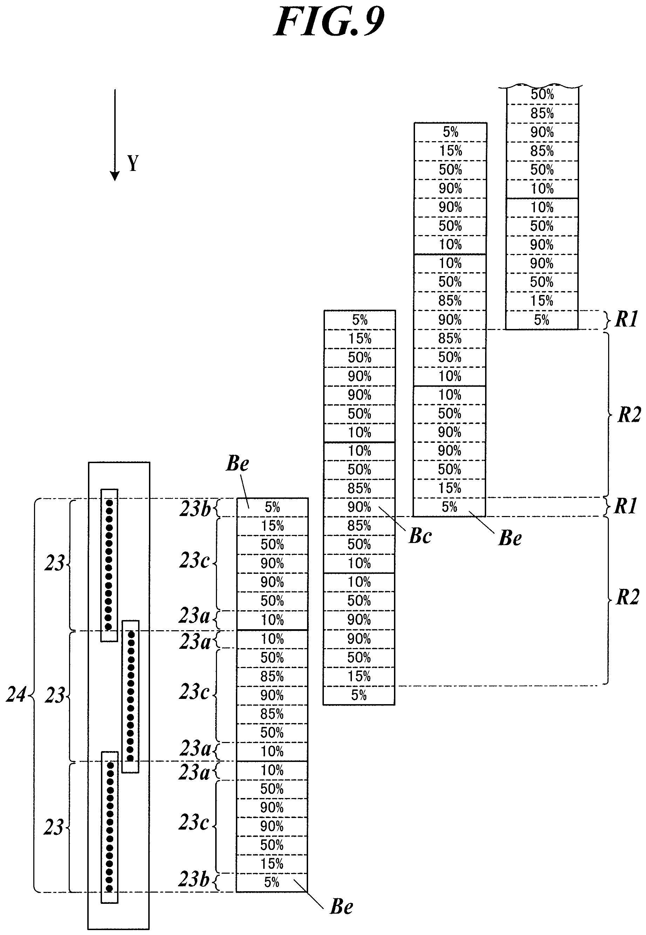

Fig. 9 is a schematic view illustrating an example allocation of the print rates in the regions in the recording element group 24 and the relative positions of a head unit 20 in several main scanning operations in Modification 2.

The head unit 20 in Modification 2 has the same configuration as that in the embodiment. The recording element group 24 is composed of three recording element subgroups 23.

In Modification 2, each of the recording element subgroups 23 is divided into seven blocks having the same length in the subsidiary scanning direction, and the arrangement of the output parts 74 in the masking pattern data 70 is determined such that the print rates of the recording elements 22 in each block have the values shown in Fig. 9. The recording elements 22 in one block have the same print rate. Alternatively, the recording elements 22 contained in one block may have different print rates determined so as to satisfy the condition that the average of the print rates of the recording elements 22 contained in the one block is the value shown in Fig. 9. In this case, the print rates are set such that the print rates of the recording elements 22 across adjacent blocks gradually decrease or increase according to the order of the recording elements 22 disposed in the subsidiary scanning direction, for example. Among the seven blocks in each of the recording element subgroups 23, the blocks at two ends correspond to the joint region 23a or the end region 23b, and the remaining five blocks correspond to the central region 23c.

As illustrated in Fig. 9, the block corresponding to the joint region 23a has a print rate of 10% while the block corresponding to the end region 23b has a print rate of 5%. The print rate in the end region 23b is set to be lower than that of the joint region 23a. The blocks located at the two ends of the recording element group 24 are represented as an end block Be and the block located in the center thereof is represented as a central block Bc below.

In Modification 2, the head unit 20 relatively moves on the recording medium P in the subsidiary scanning direction by a distance equal to 10/21 of the length of the recording element group 24 in the subsidiary scanning operation in each subsidiary scanning direction. This moving distance is shorter than that in the embodiment (half the length of the recording element group 24 in the subsidiary scanning direction). As a result, the recording medium P has regions carrying the images recorded by two main scanning operations and regions carrying the images recorded by three main scanning operations.

Specifically, the image is recorded by three main scanning operations in total in a region R1 (first region) in which the pixels are output by the recording elements 22 in the end block Be as follows: The pixels are output by the recording elements 22 corresponding to the end block Be of the recording element group 24 in the first and third main scanning operations, and the pixels are output by the recording elements 22 corresponding to the central block Bc of the recording element group 24 in the second main scanning operation. In this modification, because the print rates of the end block Be and the central block Bc are set at 5% and 90%, respectively, the region R1 has a total print rate of 100% in the three main scanning operations.

In contrast, in a region R2 (second region) other than the region R1, the image is recorded by the recording elements 22 corresponding to the blocks other than the end block Be and the central block Bc in the recording element group 24 in two main scanning operations. The blocks each have a print rate set so as to have a total print rate of 100% in the two main scanning operations.

Thus, in the inkjet recording apparatus 1 according to Modification 2, the thinned image data is determined such that the print rates of the ink ejection positions of the recording elements 22 in the end region 23b or a predetermined neighboring region from the end of the recording element group 24 and the print rates of the ink ejection positions of the recording elements 22 in the joint region 23a are lower than the print rates of the ink ejection positions of the recording elements 22 in the region other than the end region 23b and the joint region 23a. Such allocation of the print rates can further reduce the visual recognition of the two ends in the subsidiary scanning direction of the image recorded by the recording element group 24 in each main scanning operation. As a result, the image recorded by the head unit 20 can have a further reduced uneven density.

The main and subsidiary scanning controls are performed (by a recording controller) based on the relative moving distance between the head unit 20 and the recording medium P in the subsidiary scanning control and the print rates of the recording elements 22 in the main scanning control, where the subsidiary scanning control is set such that the number of operations relevant to the ejection of the ink performed on the region R1 of the recording medium P by the recording elements 22 contained in the end region 23b is larger than the number of operations relevant to the ejection of the ink performed in the region R2 other than the region R1 in the thinned image data. The image can be thereby recorded such that the positions of the recording medium P in the subsidiary scanning direction have a total print rate of 100%, even if the end region 23b and the joint region 23a have different print rates.

### (Modification 3)

Modification 3 of the embodiment will now be described. Modification 3 may be combined with other modifications.

In Modification 3, an example will be described in which the interval in the subsidiary scanning direction between two recording element subgroups 23 at the joint of the recording element subgroup 23 is larger than the interval in the subsidiary scanning direction between the recording elements 22 of the recording element subgroup 23. Other points are similar to those in the embodiment, and differences from the embodiment will be described.

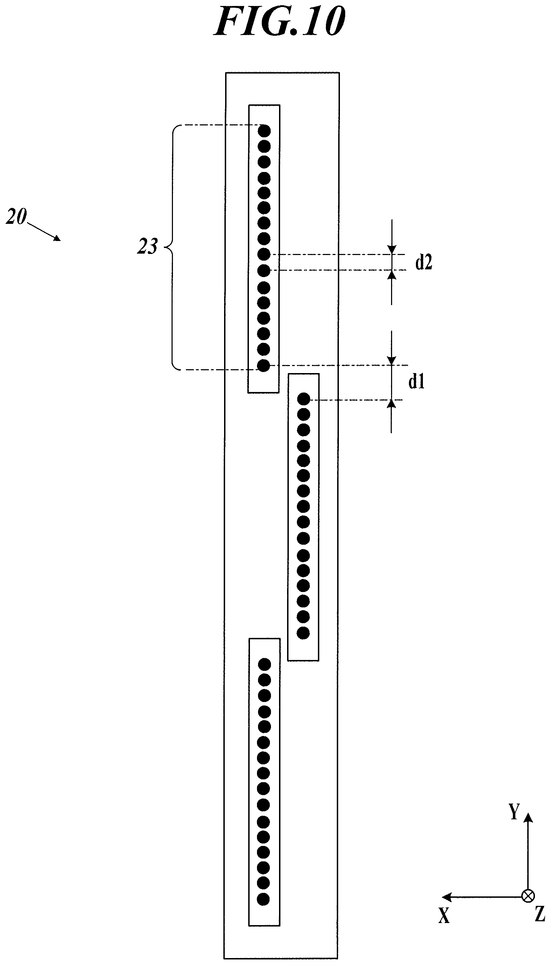

Fig. 10 is a schematic view illustrating a recording element group 24 according to Modification 3.

As illustrated in Fig. 10, in Modification 3, the interval d1 in the subsidiary scanning direction between two recording element subgroups 23 at the joint of the recording element subgroup 23 is larger than the interval d2 in the subsidiary scanning direction between the recording elements 22 of the recording element subgroup 23. The present invention includes not only such intentional positioning, but also unintentional one as a result of a fluctuation in the positions of the recording heads 21 disposed.

A head unit having such a configuration has no recording elements 22 in a portion corresponding to the interval d1; therefore, the portion has a print rate of 0% in the main scanning operation. For this reason, in Modification 3, the arrangement of the output parts 74 in the masking pattern data 70 and the relative moving distance between the head unit 20 and the recording medium P in the subsidiary scanning operation are determined such that the print rate in the interval d1 having a print rate of 0% in one main scanning operation is complemented by the ejection of the ink in another main scanning operation. As a result, even if the interval d1 is larger than the interval d2, the main scanning operation and the subsidiary scanning operation can be performed such that the positions of the recording medium P in the subsidiary scanning direction have a print rate of 100%, thereby recording the image.

As described above, in Modification 3, the interval in the subsidiary scanning direction between a recording element 22 of one recording element subgroup 23 and another recording element 22 in its adjacent recording element subgroup 23 in the subsidiary scanning direction is larger than the interval in the subsidiary scanning direction between the recording elements 22 of the one recording element group 23. Such a configuration prevents the ejection of the ink in the portions having a large interval in the subsidiary scanning direction of the recording element subgroup 23 in the control of the main scanning operation, and therefore can further reduce the visual recognition of the uneven density generated in the portions of the image recorded by the inkjet recording apparatus 1 and recorded by the recording elements 22 in the joint region 23a. If the recording heads 21 are disposed in such a manner, the ink can be ejected to the recording medium P from the recording elements 22 in different regions of the recording element group 24 through several main scanning control operations to normally record the image. For this reason, the uneven density of the image recorded by the inkjet recording apparatus 1 can be reduced without precise positioning of the recording heads 21 in the head unit 20.

### (Modification 4)

Modification 4 of the embodiment will now be described. Modification 4 may be combined with other modifications.

In Modification 4, an example operation will be described in which the recording element group 24 contains a recording element 22 having poor ejection of the ink. Other points are similar to those in the embodiment, and differences from the embodiment will be described.

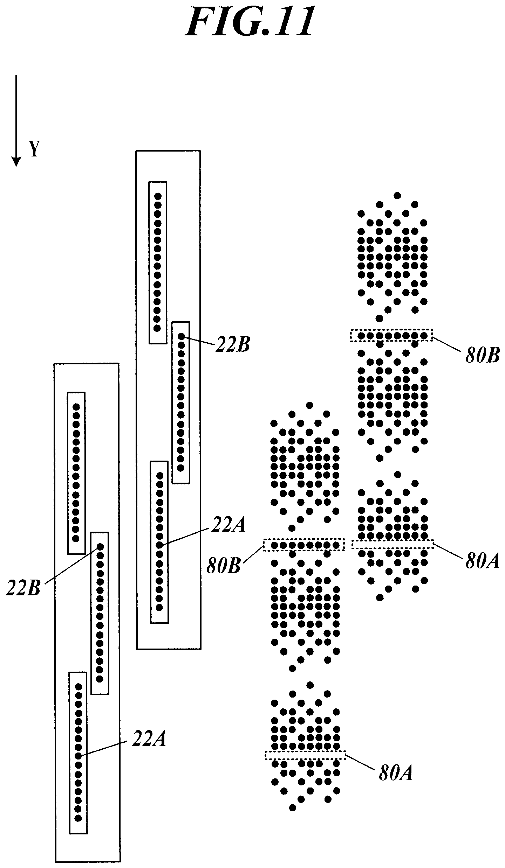

Fig. 11 is a schematic view illustrating the main scanning operation according to Modification 4.

The recording element 22A illustrated in Fig. 11 has poor ejection of the ink, and cannot normally eject the ink. In this specification, the poor ejection of the ink includes the cases where the ink is not ejected after output of the driving voltage waveform, as well as the cases where the ink is not ejected in a volume according to the driving voltage waveform or the ink is ejected in a deviated direction.

In Modification 4, as illustrated in the output pattern 80A of Fig. 11, the pixels are not output in the output pattern 80A by the recording element 22A having the poor ejection of the ink in each of the main scanning operations, resulting in no ejection of the ink. As a result, the position corresponding to the recording element 22A in each main scanning operation has a print rate of 0%.

On the other hand, the ink is ejected to the position having no ink ejected from the recording element 22A in one main scanning control from a recording element 22B corresponding to the position in another main scanning control operation, complementing the non-ejection of the ink in the one main scanning control. In other words, as illustrated in Fig. 11, the ink is ejected to the positions corresponding to the output pattern 80A by the recording element 22B according to the output pattern 80B in which all of the pixels are output. As a result, the position corresponding to the recording element 22B in the other main scanning operation has a print rate of 100%. In this case, the correction data of the masking pattern data 70 is generated, and is stored in the memory 44. The thinned image data is generated based on the correction data.

Fig. 11 illustrates an example in which the poor ejection of the ink by the recording element 22A is complemented by an additional main scanning control operation. Alternatively, according to an aspect, the poor ejection of the ink may be complemented through two or more additional main scanning control operations. For example, in the case of complementation through additional two main scanning control operations, the poor ejection of the ink by the recording element 22A may be complemented with the print rate set at 50% in each of the additional two main scanning control operations. A larger number of additional main scanning control operations to perform the complementation can reduce the print rate for the complementation in each main scanning operation, thus reducing the visual recognition of the complementation performed.

As described above, in the inkjet recording apparatus 1 according to Modification 4, the print rates of the ink ejection positions by the recording elements 22 of the recording element group 24 are determined in the thinned image data such that the operation relevant to the ejection of the ink by the specific recording elements 22 of the recording element group 24 is not performed in one main scanning control operation and the operation to complementarily eject the ink is performed, in another main scanning control operation, by the recording elements 22 having the ink ejection positions in the positions in which the operation relevant to the ejection of the ink by the specific recording elements 22 of the recording element group 24 is not performed. Even if some of the recording elements 22 have the poor ejection of the ink, such allocation of the print rates can complement the non-ejection of the ink caused by the recording elements 22 having the poor ejection of the ink through at least part of several main scanning control operations, thereby recording a normal image having a reduced uneven density.

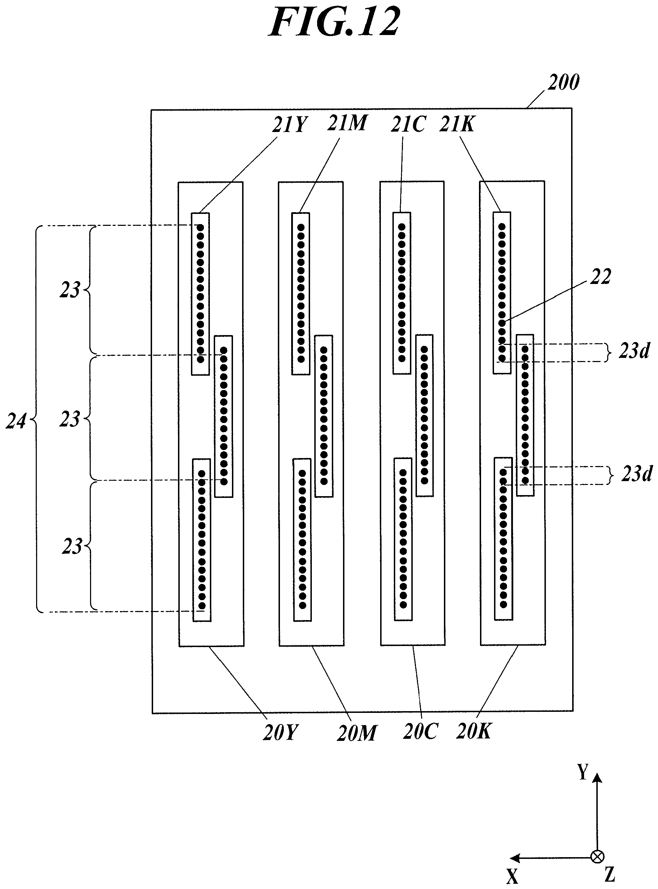

The embodiment and the modifications described above will not limit the present invention, and a variety of modifications can be made. For example, in the embodiment and the modifications described above, the recording elements 22 contained in each of the recording heads 21 are disposed so as not to overlap with each other in the subsidiary scanning direction. The embodiment and the modifications are not intended to be limitative, and as illustrated in Fig. 12, the recording elements 22 contained in each of the recording heads 21 may overlap with each other in the subsidiary scanning direction. In the example illustrated in Fig. 12, each of the head units 20 includes three recording heads 21. The three recording heads 21 are disposed at different positions in the subsidiary scanning direction in the state where the positions of the recording elements 22 of one recording head 21 in the subsidiary scanning direction overlap with those of the recording elements 22 of the other recording head 21 in an overlapping region 23d. The overlapping region 23d is set such that among the two recording heads 21 having the recording elements 22 in the overlapping region 23d, the recording elements 22 in one of the recording heads 21 output the pixels in the positions in the subsidiary scanning direction. For example, at a specific position in the overlapping region 23d in the subsidiary scanning direction, the recording is performed on one side thereof by a recording element 22 of one recording head 21 of the two recording heads 21, and is performed on the other side thereof by a recording element 22 of the other recording head 21. The recording elements 22 may be set such that the recording elements 22 of the one recording head 21 and those of the other recording head 21 are alternately used in the subsidiary scanning direction in the overlapping region 23d to record an image. Among the recording elements 22 of the recording heads 21, adjacent recording element subgroups 23 in the subsidiary scanning direction consist of the recording elements 22 set so as to output the pixels.

In the embodiment and the modifications described above, under the control by the controller 40, the image data is multiplied by the masking pattern data 70 in the drive controlling circuits for the drive units 25, and the driving waveform voltages are fed from the driving circuits to the recording elements 22 by the drive controlling circuits according to the thinned image data sequentially obtained, but the embodiment and the modifications are not intended to be limitative. For example, according to an aspect, the image processor 50 may multiply the masking pattern data 70 by the segments of the image data each corresponding to several main scanning operations to generate the thinned image data segments corresponding to the several main scanning operations, and store the thinned image data segments in the memory 44. In this example, the image processor 50 functions as the thinning unit. According to another aspect, the thinned image data may be generated in the external device 2, and may be fed to the controller 40 through the interface 101.

As described above, the thinned image data may be sequentially generated by the drive controlling circuits according to the timing at which the driving circuits feed the driving voltage waveforms to the recording elements 22, or may be preliminarily generated by the start of the image recording operation to be stored in the memory 44.

The embodiment has been described by way of the example in which, as illustrated in Portion C of Fig. 5, the arrangement of the output parts 74 in the masking pattern data 70 is determined so as to have a distribution in which the central portion of each recording element subgroup 23 has a print rate of 100%, the joints of the recording element subgroups 23 and the two ends of the recording element group 24 have a print rate of 0%, and the print rate linearly varies therebetween. The present invention however should not be limited to the embodiment the present invention. For example, the arrangement of the output parts 74 in the masking pattern data 70 may be determined so as to have a distribution in which the central portion of each recording element subgroup 23 has a print rate of 80%, the joints of the recording element subgroups 23 and the two ends of the recording element group 24 have a print rate of 20%, and the print rate linearly varies therebetween. The numeric values of 80% and 20% can be varied such that the total print rate is 100%. The arrangement of the output parts 74 in the masking pattern data 70 may be determined so as to have a distribution of the print rate varying in the form of a curve, rather than the distribution of the print rate linearly varying.

In the embodiment and the modifications described above, the print rates of the joint region 23a and the end region 23b are lower than that of the central region 23c. In an alternative embodiment, the print rate of the joint region 23a may be lower than that of the central region 23c, and the print rate of the end region 23b may be not lower than that of the central region 23c.

In the embodiment and the modifications described above, the head unit 20 is driven for scanning in the main scanning operation, and the recording medium P is fed in the subsidiary scanning operation. The present invention, however, may have any other configuration. For example, in the main scanning operation, the head unit 20 may be fixed, and the recording medium P may be fed in the main scanning direction. In the subsidiary scanning operation, the recording medium P may be fixed, and the head unit 20 may be driven in the subsidiary scanning direction.

In the embodiment and the modifications described above, the head unit 20 is driven in the +X direction illustrated in Fig. 1 in each of the main scanning operations. Alternatively, the present invention may have any other configuration. For example, the moving direction of the head unit 20 may be switched between the +X direction and the -X direction in each main scanning operation. In another embodiment, the head unit 20 may reciprocate in the +X direction and the -X direction in one main scanning operation.

In the embodiment and the modifications described above, the recording medium P is fed by a predetermined feeding distance in each of the subsidiary scanning operations. Alternatively the present invention may have any other configuration. For example, portions in which image formation is not performed may have an increased feeding distance of the recording medium P in the subsidiary scanning operation, and may be exempted from the main scanning operation.

Several embodiments of the present invention have been described, but these embodiments are not intended to limit the scope of the present invention, and the present invention includes the scope of the invention specified in CLAIMS and equivalents thereof.

### Industrial Applicability

The present invention can be used in inkjet recording apparatuses and ink jet recording methods.

### Description of Reference Numerals

1 inkjet recording apparatus
2 external device
10 conveyance unit
11a driving roller
11b following roller
12 driving motor
13 conveyor belt
200 carriage
201 holder
20, 20Y, 20M, 20C, 20K head unit
21, 21Y, 21M, 21C, 21K recording head
22 recording element
23 recording element subgroup
23a joint region
23b end region
23c central region
23d overlapping region
24 recording element group
25 drive unit
30 main scanner
31 carriage rail
40 controller
41 CPU
42 RAM
43 ROM
44 memory unit
50 image processor
60 ink receiver
101 interface
102 bus
70 masking pattern data
71 data group
71a joint data group
71 b end data group
71 c central data group
72 column data group
73 masking part
74 output part
80 output pattern
Be end block
Bc central block
P recording medium

## Claims

1. An inkjet recording apparatus,
a recorder including multiple recording heads disposed at different positions in a subsidiary scanning direction and including multiple recording elements which eject ink, at least part of the multiple recording elements in each of the multiple recording heads defining a recording element subgroup, wherein the recording elements contained in a recording element group consisting of the recording element subgroups in the multiple recording heads eject the ink to a recording medium within a width in the subsidiary scanning direction according to an arrangement of the multiple recording heads; and
a recording controller alternately performing a main scanning control for ejecting the ink from the recording element group to the recording medium while relatively moving the recorder and the recording medium in a main scanning direction intersecting the subsidiary scanning direction and a subsidiary scanning control for relatively moving the recorder and the recording medium in the subsidiary scanning direction, and controlling the recorder for recording an image on the recording medium such that the ink is complementarily ejected from at least two recording elements to positions of the recording medium in the subsidiary scanning direction according to at least two main scanning controls, **characterized in that**
the recording controller performs the main scanning control based on thinned image data determined in an operation relevant to complementary ejection of the ink at the positions of the subsidiary scanning direction by the at least two recording elements, such that a print rate of a recording element in a joint region is lower than a print rate of a recording element in a region other than the joint region, the joint region being a predetermined neighboring region from a boundary in the subsidiary scanning direction between a recording element of one recording element subgroup and another recording element in a recording element subgroup adjacent to the one recording element subgroup in the subsidiary scanning direction, the print rate indicating a proportion of an operation relevant to ejection of the ink according to data of a target image to be recorded.

2. The inkjet recording apparatus according to claim 1,
wherein the thinned image data includes the print rates at ink ejection positions of the recording elements in the recording element group, the print rates being determined such that the recording element closer to the boundary has a lower print rate at the ink ejection position among the recording elements contained in the joint region.

3. The inkjet recording apparatus according to claim 1 or 2,
wherein the thinned image data is determined such that the print rates at the ink ejection positions by the recording elements belonging to regions of the recording element group divided at predetermined positions in the subsidiary scanning direction gradually decrease or increase according to the order of the recording elements disposed in the recording element group in the subsidiary scanning direction.

4. The inkjet recording apparatus according to any one of claims 1 to 3,
wherein the thinned image data is determined such that non-ejection positions not undergoing the operation relevant to the ejection of the ink are disposed at random in directions corresponding to the main scanning direction and the subsidiary scanning direction.

5. The inkjet recording apparatus according to claims 1 to 4,
wherein the thinned image data is determined such that the print rates at the ink ejection positions of the recording elements in an end region being a predetermined neighboring region from one end of the recording element group and the print rates at the ink ejection positions by the recording elements in the joint region are lower than the print rates at the ink ejection positions by the recording elements in regions other than the end region and the joint region.

6. The inkjet recording apparatus according to claim 5,
wherein the main scanning control and the subsidiary scanning control are performed based on a relative moving distance between the recorder and the recording medium in the subsidiary scanning control and the print rates of the recording elements in the main scanning control, wherein the subsidiary scanning control is set such that the number of operations relevant to the ejection of the ink performed in a first region of the recording medium by the recording elements contained in the end region is larger than the number of operations relevant to the ejection of the ink in a second region other than the first region in the thinned image data.

7. The inkjet recording apparatus according to any one of claims 1 to 6, further comprising:
a memory storing thinned pattern data indicating positioning of the non-ejection positions not undergoing the operation relevant to the ejection of the ink, and
a thinning unit generating the thinned image data based on the image data and the thinned pattern data.

8. The inkjet recording apparatus according to any one of claims 1 to 7,
wherein an interval in the subsidiary scanning direction between a recording element of one recording element subgroup and another recording element of a recording element subgroup adjacent to the subsidiary scanning direction is larger than an interval in the subsidiary scanning direction between the recording elements of the one recording element subgroup.

9. The inkjet recording apparatus according to any one of claims 1 to 8,
wherein the print rates at the ink ejection positions by the recording elements in the recording element group contained in the thinned image data are determined such that the operation relevant to the ejection of the ink by specific recording elements of the recording element group is not performed in one of the main scanning controls and the operation relevant to the ejection of the ink is complementarily performed by the recording elements having the ink ejection positions at the non-ejection positions not undergoing the operation relevant to the ejection of the ink by the specific recording elements of the recording element group in the other of the main scanning controls.

10. The inkjet recording apparatus according to any one of claims 1 to 9, further comprising an ink receiver receiving the ink ejected from the recording elements and not used in the recording of the image on the recording medium,
wherein the recording controller causes the recording elements to eject the ink from the recording elements to the ink receiver if a predetermined condition is satisfied.

11. An ink jet recording method by an inkjet recording apparatus including a recorder that includes multiple recording heads disposed at different positions in a subsidiary scanning direction and including multiple recording elements ejecting ink, at least part of the multiple recording elements in each of the multiple recording heads defining a recording element subgroup, wherein the recording elements contained in a recording element group consisting of the recording element subgroups in the multiple recording heads eject the ink to a recording medium within a width in the subsidiary scanning direction according to an arrangement of the multiple recording heads,
recording controlling of alternately performing main scanning control for ejecting the ink from the recording element group to the recording medium while relatively moving the recorder and the recording medium in a main scanning direction intersecting the subsidiary scanning direction and a subsidiary scanning control for relatively moving the recorder and the recording medium in the subsidiary scanning direction, and controlling the recorder for recording an image on the recording medium such that the ink is complementarily ejected from at least two recording elements to positions of the recording medium in the subsidiary scanning direction according to at least two main scanning controls, **characterized in that**
the recording controlling performs the main scanning control based on thinned image data determined in an operation relevant to complementary ejection of the ink at the positions of the subsidiary scanning direction by the at least two recording elements such that a print rate of a recording element in a joint region is lower than a print rate of a recording element in a region other than the joint region, the joint region being a predetermined neighboring region from a boundary in the subsidiary scanning direction between a recording element of one recording element subgroup and another recording element in a recording element subgroup adjacent to the one recording element subgroup in the subsidiary scanning direction, the print rate indicating a proportion of an operation relevant to ejection of the ink according to data of a target image to be performed.
